# EUROPEAN PATENT APPLICATION

(11) **EP 2 908 533 A1**
(43) Date of publication of application: **19.08.2015**
(21) Application number: 13844857.6
(22) Date of filing: 08.04.2013
(51) Int. Cl.: H04N 19/94, H04N 19/50, H04N 19/597, H04N 19/52

(54) **METHOD AND DEVICE FOR BUILDING CANDIDATE VECTOR LIST**

(30) Priority: 09.10.2012 CN 201210379767
(71) Applicant: Huawei Technologies Co., Ltd., Longgang District Shenzhen, Guangdong 518129 (CN)
(72) Inventor: LIN, Yongbing, Shenzhen, Guangdong 518129 (CN)
(74) Representative: Goddar, Heinz J.
(86) International application number: PCT/CN2013/073872
(87) International publication number: WO 2014/056316

(57) **Abstract**

The present invention discloses a method and an apparatus for constructing a candidate vector list and relates to the field of video coding and decoding, which is invented to improve coding compression performance. The method includes: acquiring an inter-view motion vector predictor IVMVP of a current block and a motion vector predictor MVP of the current block, where the MVP includes a temporal motion vector predictor TMVP and a spatial motion vector predictor SMVP; determining whether the IVMVP is the MVP or a disparity vector predictor DVP; and sorting the IVMVP, the TMVP, and the SMVP according to a result of the determining, so as to construct the candidate vector list CVL. The present invention is mainly applied to a process of multi-view coding and decoding based on the 3DV standard.

## Description

### TECHNICAL FIELD

The present invention relates to the field of video coding and decoding, and in particular, to a method and an apparatus for constructing a candidate vector list.

### BACKGROUND

A frame prediction technology, as an essential technology in video coding, is widely applied in coding processes of ordinary television signals, high definition television signals, and streaming media. A frame prediction technology in the high efficiency video coding (High Efficiency Video Coding, HEVC for short) standard uses a traditional method which is based on motion compensated prediction (Motion Compensated Prediction, MCP for short), but different from previous standards in terms of motion vector prediction, a multi-motion-vector competition technology is used in the HEVC standard, which improves accuracy of the motion vector prediction, thereby improving coding compression performance.

A fundamental principle of the multi-motion-vector competition technology is that, multiple pieces of motion vector information are acquired according to multiple coded reference blocks corresponding to a current block, where motion vector information includes a motion vector (Motion Vector, MV for short) value and an index value, and the index value is used to identify a reference frame directed to by an MV. A candidate vector list (Candidate Vector List, CVL for short) is formed, according to a specific order, by the multiple pieces of motion vector information acquired according to the reference blocks, and an index number is allocated to each vector in the CVL. During coding, a best MV is selected from multiple motion vectors in the CVL and used as an MV predictor (MV Predictor, MVP) of the current block, and an index number, in the CVL, of the selected MV is written into a bitstream.

The HEVC 3D extension standard (HEVC 3D Extension, 3DV for short), as an extension standard of the HEVC standard, and a multi-view (Multi-View) video coding technology is added on a basis of the HEVC standard. The multi-view coding technology supports joint coding of multiple video sequences (hereinafter referred to as view (View)) which have a relatively strong correlation. Redundancy is removed by using correlation among views and by using an inter-view prediction (Inter-view Prediction, IVP for short) technology, so as to improve coding performance. The inter-view prediction technology generally includes: (1) a disparity compensated prediction technology (Disparity Compensated Prediction, DCP for short), that is, predictive coding is performed on a current picture by using a reconstructed picture of a base view (Base View) as a reference picture; (2) an inter-view MV prediction technology (Inter-view MV Prediction, IVMVP), that is, predictive coding is performed on a current picture by using MV information of a base view as reference MV information; and (3) an inter-view residual prediction technology (Inter-View Residual Prediction, IVRP for short), that is, predictive decoding is performed on a current picture by using residual information of a base view as reference information.

The foregoing (2) inter-view MV prediction technology (Inter-View MV Prediction, IVMVP) further specifically includes the following two main steps: (1) acquire an MV predictor of the current block according to the base view, where the MV predictor is acquired from the base view rather than a view in which the current block is located, and therefore, the MV predictor is also called an inter-view MV predictor (Inter-view MVP, IVMVP for short); and (2) construct a CVL according to the IVMVP and various MV predictors acquired from the view in which the current block is located.

In the foregoing inter-view MV prediction technology, the prior art has at least the following problem: when a CVL is constructed, an existent CVL constructing manner may affect accuracy of MV prediction, thereby affecting coding compression performance.

### SUMMARY

Embodiments of the present invention provide a method and an apparatus for constructing a candidate vector list, which can eliminate an impact of low accuracy of MV prediction on coding compression performance.

According to one aspect, an embodiment of the present invention provides a method for constructing a candidate vector list, including:
acquiring an inter-view motion vector predictor IVMVP of a current block and a motion vector predictor MVP of the current block, where the MVP includes a temporal motion vector predictor TMVP and a spatial motion vector predictor SMVP;
determining whether the IVMVP is the MVP or a disparity vector predictor DVP; and
sorting the IVMVP, the TMVP, and the SMVP according to a result of the determining, so as to construct the candidate vector list CVL.

According to another aspect, an embodiment of the present invention further provides an apparatus for constructing a candidate vector list, including:
an acquiring unit, configured to acquire an inter-view motion vector predictor IVMVP of a current block and a motion vector predictor MVP of the current block, where the MVP includes a temporal motion vector predictor TMVP and a spatial motion vector predictor SMVP;
a determining unit, configured to determine whether the IVMVP is the MVP or a disparity vector predictor DVP; and
a sorting unit, configured to sort the IVMVP, the TMVP, and the SMVP according to a result of the determining, so as to construct the candidate vector list CVL.

According to the method and apparatus for constructing a candidate vector list provided in the embodiments of the present invention, whether an acquired IVMVP is an MVP or a DVP can be determined in a 3DV coding process. Because contribution made by the MVP to coding compression performance is different from contribution made by the DVP to the coding compression performance, a position of the IVMVP in a CVL interferes with accuracy of vector prediction and further interferes with performance of 3DV coding compression. Compared with the prior art where the IVMVP is directly inserted in a preset position in the CVL without identifying the IVMVP, according to the method and apparatus for constructing a candidate vector list provided in the embodiments of the present invention, an inserting position in the CVL may be selected for the IVMVP according to whether the IVMVP is the MVP or the DVP, thereby improving the accuracy of vector prediction and improving the performance of 3DV coding compression.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG 1 is a schematic diagram of a current block when a candidate vector list is constructed according to an embodiment of the present invention;
FIG. 2 is a schematic diagram of a current view and a base view when a candidate vector list is constructed according to an embodiment of the present invention;
FIG. 3 is a flowchart of a method for constructing a candidate vector list according to an embodiment of the present invention;
FIG. 4 is a schematic diagram of a CVL according to an embodiment of the present invention;
FIG. 5 is a schematic diagram of a CVL in the prior art;
FIG. 6 is a schematic diagram of inserting an IVMVP to an MVP sequence according to an embodiment of the present invention;
FIG. 7 is a schematic diagram of a CVL constructed after an IVMVP is inserted according to an embodiment of the present invention;
FIG. 8 is a schematic diagram of a CVL constructed after an IVMVP is inserted in an application scenario of the present invention;
FIG. 9 is a schematic structural diagram of a first apparatus for constructing a candidate vector list according to an embodiment of the present invention;
FIG 10 is a schematic structural diagram of a second apparatus for constructing a candidate vector list according to an embodiment of the present invention;
FIG. 11 is a schematic structural diagram of a third apparatus for constructing a candidate vector list according to an embodiment of the present invention;
FIG. 12 is a schematic structural diagram of a fourth apparatus for constructing a candidate vector list according to an embodiment of the present invention; and
FIG. 13 is a schematic structural diagram of a fifth apparatus for constructing a candidate vector list according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

It should be noted that, because abbreviations of both the foregoing inter-view MV prediction technology and the foregoing inter-view MV predictor are IVMVP, to avoid confusion, it is clarified herein that all IVMVPs appear in the following descriptions indicate inter-view MV predictors (or being called inter-view motion vector predictors), which is not repeatedly described for distinction hereinafter.

Before embodiments of present invention are described, relevant technologies related to the embodiments of the present invention are first briefly introduced.

Generally, a video sequence includes many picture frames, and in a coding compression process, each frame needs to be divided into multiple blocks (Block), and then frame prediction is performed by taking a block as a unit. In the HEVC standard, basic concepts of coding unit CU (Coding Unit), prediction unit PU (Prediction Unit), and transform unit TU (Transform Unit) are used, and a frame is functionally divided into multiple units, and the foregoing blocks (Block) are CUs, PUs, or TUs. When frame prediction is performed on a current block of a frame, five spatial motion vector predictors SMVP: SMVP_{A0}, SMVP_{A1}, SMVP_{B0}, SMVP_{B1}, and SMVP_{B2}, are acquired from five reference blocks which are adjacent to the current block in a space domain. The five reference blocks are spatial adjacent blocks belonging to a same frame as the current block; and a temporal motion vector predictor TMVP also needs to be acquired from a reference block adjacent to the current block in a time domain, where the reference block is a temporal adjacent block which belongs to a same timeline but does not belong to a same frame as the current block. After the SMVPs and the TMVP are acquired, the multiple SMVPs and one TMVP are sorted according to a predetermined order, thereby constructing a CVL.

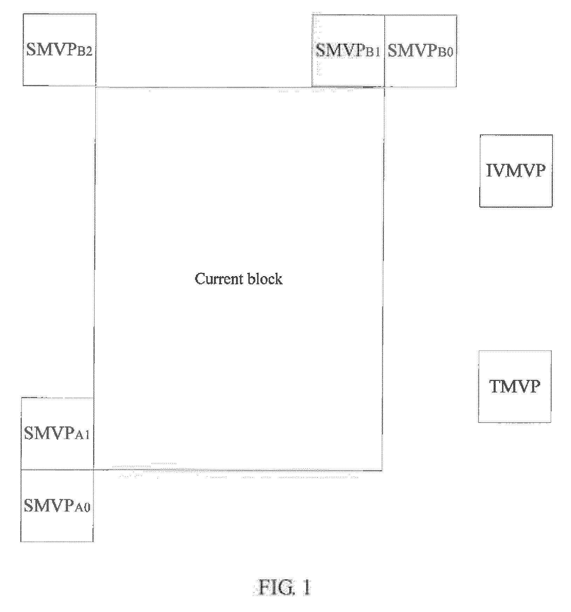

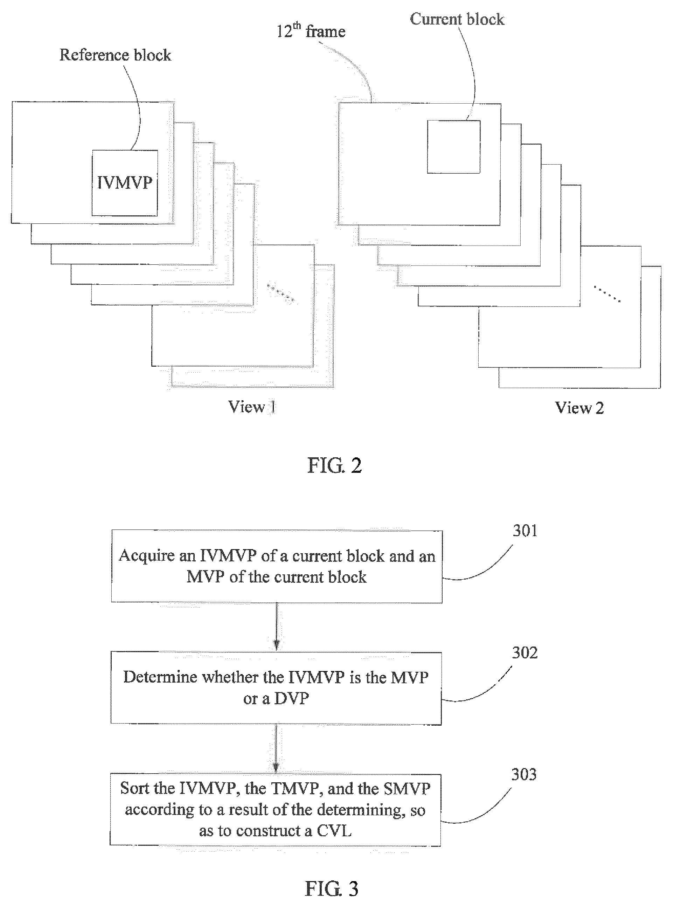

In the 3DV standard, a coding compression process is performing joint (integrated) coding compression on two or more video sequences (or called views (View)). The multiple views are obtained and collected in a same scenario from different perspectives, where one view is used as a base view, and frame prediction of another view needs to refer to a predictor of the base view. Specifically, as shown in FIG. 2, a view 1 is the base view, and a view 2 is a current view on which frame prediction is performed. When frame prediction is performed on a current block in a current frame of the current view, in addition to that five SMVPs and one TMVP need to be acquired according to the foregoing manner shown in FIG. 1, an IVMVP needs to be acquired from the base view. When a one-way frame prediction technology is used, one IVMVP is acquired, and when a two-way frame prediction technology is used, two IVMVPs are acquired. Because the IVMVP is acquired across views, the IVMVP is called an inter-view motion vector predictor. After the SMVPs, the TMVP, and the IVMVP are acquired, the multiple SMVPs, one TMVP, and one IVMVP are sorted according to a predetermined order, so as to construct a CVL.

In a description of the following embodiments of the present invention, the blocks (including the reference blocks and the current block) are CUs, PUs, or TUs, and to construct a CVL for the current block is to construct a CVL for a CU, PU, or TU. In the following description, CU, PU, or TU is no longer distinguished but block is used as a concept for a unified description.

In light of the foregoing multi-view joint (integrated) coding compression technology, an embodiment of the present invention provides a method for constructing a CVL, where the method is specifically shown in FIG. 3, and the method includes the following steps:
301: Acquire an IVMVP of a current block and a MVP of the current block.

Still as shown in FIG. 2, the current block is a predicted block in a current frame (the 12^{th} frame) in the view 2. The acquiring an IVMVP of a current block is acquiring a motion vector predictor MVP of a reference block in the view 1.

Still as shown in FIG. 1, the acquiring a MVP of the current block is specifically: acquiring five SMVPs from five reference blocks which are adjacent to the current block in a space domain; and acquiring one TMVP from a reference block which is adjacent to the current block in a time domain.

Thereby, one inter-view MVP (IVMVP), five intra-view spatial MVPs (SMVPs), and one intra-view temporal MVP (TMVP) are acquired.

In an actual application, after the five SMVPs are acquired, not more than five SMVPs need to be selected from the acquired five SMVPs and added into the CVL according to a predetermined rule, and for details of a specific predetermined rule, reference is made to descriptions in the HEVC and 3DV standards, which are not repeatedly described in the embodiment of the present invention. In addition, in the following descriptions of the embodiment of the present invention, that the acquired five SMVPs are all added to the CVL is used as an example for description, and that the acquired five SMVPs are all added to the CVL is only an exemplary manner in the embodiment of the present invention, and is not intended to limit the embodiment of the present invention.
302: Determine whether the IVMVP is the MVP or a DVP.

After the IVMVP is acquired in step 301, a sorting position of the IVMVP in the CVL needs to be determined, and before the sorting position of the IVMVP is determined, whether the IVMVP is the MVP or the DVP needs to be determined. Because the IVMVP is an MVP acquired across views, the IVMVP may be the MVP or the disparity vector predictor DVP.

Predictive accuracy of the MVP and that of the DVP are different, which leads to different contribution to coding compression performance. When the sorting position of the IVMVP is determined, a vector predictor VP with higher predictive accuracy needs to be sorted in a front position in the CVL, and therefore, in follow-up coding, the VP in the front position in the CVL is selected as a vector predictor VP of the current block, and an index number of this vector predictor VP is written into a bitstream.
303: Sort the IVMVP, the TMVP, and the SMVP according to a result of the determining, so as to construct a CVL.

The TMVP is the TMVP acquired in step 301, and the SMVP is the five SMVPs acquired in step 301.

The sorting the IVMVP, the TMVP, and the SMVP according to a result of the determining specifically includes two implementation manners:
(1) Sort the TMVP and the SMVP according to a first preset rule, so as to acquire a quasi MVP sequence, and insert the IVMVP into the quasi MVP sequence according to the result of the determining in step 302, so as to construct the CVL. The first preset rule includes but is not limited to sorting rules specified in the H.26X series of standards, the MPEG-X series of standards, the HEVC standard, and the 3DV standard, and for a specific rule, reference may be made to descriptions in a related protocol, which is not repeatedly described herein.
   In the HEVC standard, because frame prediction does to relate to acquiring an MVP across views, an acquired MVP sequence is a constructed CVL; in the 3DV standard, because frame prediction further relates to acquiring an MVP across views, that is, acquiring an IVMVP, an acquired MVP sequence is temporarily not a constructed CVL, and the acquired IVMVP needs to be inserted into the acquired MVP sequence, thereby completing construction of the CVL.
   An inserting rule for inserting the IVMVP into the quasi MVP sequence according to the result of the determining in step 302 is that: when the IVMVP is the MVP, it is determined that a position of the MVP is prior to a position, when the IVMVP is the DVP, of the DVP. For example, when the IVMVP is the MVP, the MVP is inserted into a front position in the MVP sequence, and when the IVMVP is the DVP, the DVP is inserted into a rear position in the MVP sequence, thereby completing construction of the CVL.
(2) Sort the IVMVP, the TMVP, and the SMVP according to the result of the determining of step 302 and a second preset rule, so as to construct the CVL. The second preset rule is a rule for sorting the IVMVP, the TMVP, and the SMVP.

A sorting principle in which the IVMVP, the TMVP, and the SMVP are sorted according to the result of the determining of step 302 and the second preset rule is that: when the IVMVP is the MVP, it is determined that a position of the MVP is prior to a position, when the IVMVP is the DVP, of the DVP. For example, when the IVMVP is the MVP, the MVP is sorted in a front position of the MVP sequence, and when the IVMVP is the DVP, the DVP is sorted in a rear position of the MVP sequence, thereby completing construction of the CVL.

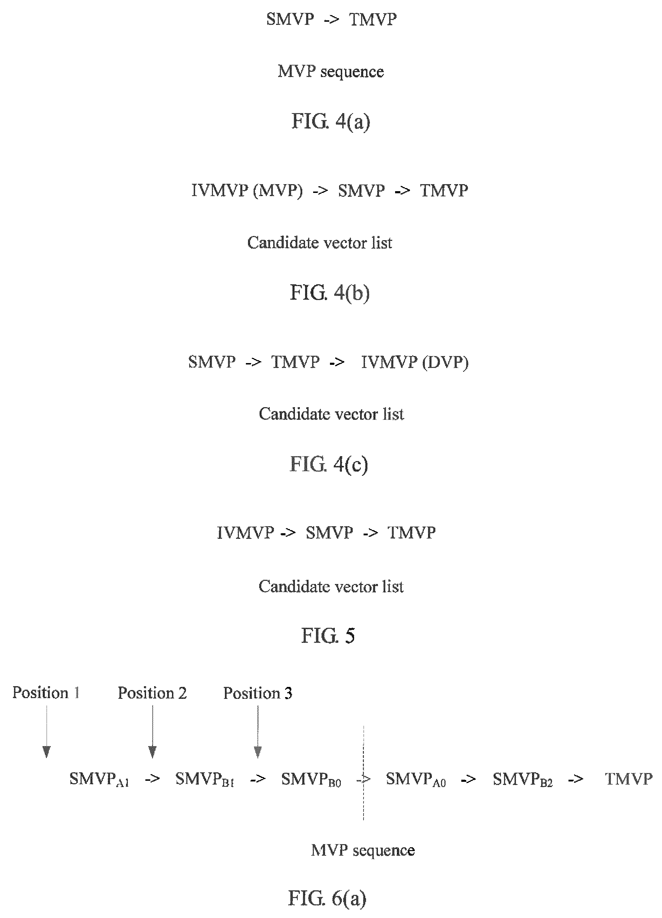

Using the implementation manner (1) as an example, specifically, as shown in FIG. 4, FIG 4(a) is the MVP sequence acquired in step 303, where the SMVP represents five specific SMVPs, a sorting position of the SMVP is prior to that of the TMVP; as shown in FIG. 4(b), when the IVMVP is the MVP, because the predictive accuracy of the MVP is higher, the MVP is inserted into the forefront of the MVP sequence, that is, the sorting position of the MVP is prior to that of the SMVP; and as shown in FIG. 4(c), when the IVMVP is the DVP, because the predictive accuracy of the DVP is lower, the DVP is inserted into the end of the MVP sequence, that is, the sorting position of the DVP is after that of the TMVP.

During coding, because in the CVL, a possibility of being selected as a vector predictor of the current block is greater for a VP in a front position, the MVP with higher predictive accuracy is sorted in the front and the DVP with lower predictive accuracy is sorted in the rear, so that a VP with higher predictive accuracy is selected as the vector predictor of the current block, thereby improving the coding compression performance.

As shown in FIG. 5, in the prior art, the acquired IVMVP is not identified, and the IVMVP is directly inserted into the forefront of the MVP sequence, that is, the sorting position of the IVMVP is prior to that of the SMVP. If the IVMVP is the DVP, in a coding process, the DVP with lower predictive accuracy may be selected as the vector predictor of the current block, thereby affecting the coding compressing performance.

According to the method for constructing a CVL provided in the embodiment of the present invention, before the CVL is constructed, an IVMVP can be identified to determine whether the IVMVP is an MVP or a DVP, and when the CVL is constructed, if the IVMVP is an MVP with higher predictive accuracy, the IVMVP is sorted in a front position in the CVL, and if the IVMVP is a DVP with lower predictive accuracy, the IVMVP is sorted in a rear position in the CVL, and therefore, in a follow-up coding process, a vector predictor with higher predictive accuracy is selected as a vector predictor of a current block, thereby improving coding compression performance.

As a detailed description for the embodiment shown in FIG. 3, an embodiment of the present invention further provides a method for constructing a CVL, where the method further describes step 302 and step 303 in FIG. 3 separately, which is specifically as follows:
(1): Determine whether the IVMVP is the MVP or the DVP.
   Manner 1: Determine whether a current frame and a reference frame directed to by an index value of the IVMVP belong to a same video sequence, that is, whether the current frame and the reference frame directed to by the index value of the IVMVP belong to a same view.

When a result of the determining is that the current frame in which the current block is located and the reference frame directed to by the index value of the IVMVP belong to the same video sequence, the IVMVP is the MVP, and when the result of the determining is that the current frame in which the current block is located and the reference frame directed to by the index value of the IVMVP do not belong to the same video sequence, the IVMVP is the DVP.

### Manner 2:

Determine whether a picture order count (Picture Order Count, POC for short) of a current frame in which the current block is located equals a POC of a reference frame directed to by an index value of the IVMVP.

When a result of the determining is that the POC of the current frame in which the current block is located does not equal the POC of the reference frame directed to by the index value of the IVMVP, the IVMVP is the MVP, and when the result of the determining is that the POC of the current frame in which the current block is located equals the POC of the reference frame directed to by the index value of the IVMVP, the IVMVP is the DVP.

Particularly, when a two-way frame prediction technology is used, two IVMVPs are acquired in step 301, and a determining manner for the two IVMVPs is as follows:
The two IVMVPs are determined separately according to the determining manner of Manner 1 or Manner 2, and when at least one of the IVMPs is the DVP, for example, one IVMVP is the MVP and the other IVMVP is the DVP, or both the two IVMVPs are DVPs, it is determined that the two IVMVPs are one DVP. When the two IVMVPs are both MVPs, it is determined that the two IVMVPs are one MVP.
   (2) Sort the IVMVP, the TMVP, and the SMVP according to a result of the determining, so as to construct a CVL.

Using the foregoing implementation manner (1) in step 303 as an example, when the IVMVP is the MVP, it is determined that any position in a first half of the MVP sequence is the position of the IVMVP (MVP). For example, in FIG. 4(a), the IVMVP (MVP) may be inserted before the SMVP; when the SMVP is specifically SMVPs of five reference blocks, as shown in FIG. 6(a), when predictors in the MVP sequence from front to rear (that is, from left to right) successively are an SMVP_{A1}, SNWP_{B1}, SMVP_{B0}, SMVP_{A0}, SMVP_{B2}, and TMVP, positions that may allow insertion in the first half of the MVP sequence are a position 1, a position 2, and a position 3. The IVMVP (MVP) may be inserted into any position of the position 1, the position 2, and the position 3.

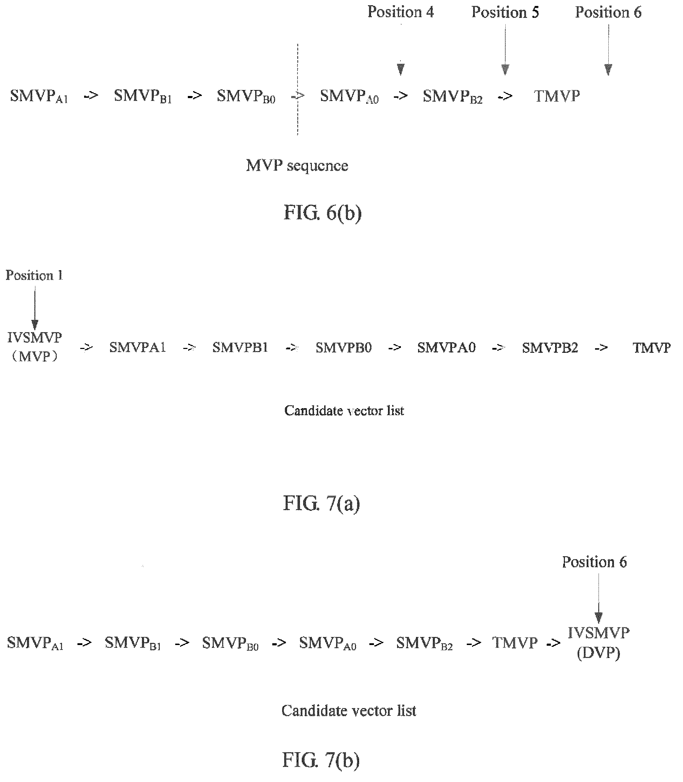

When the IVMVP is the DVP, it is determined that any position in a second half of the MVP sequence is the position of the DVP. For example, in FIG 4(a), the IVMVP (DVP) may be inserted after the SMVP and before the TMVP, or the IVMVP (DVP) is inserted after the TMVP; when the SMVP is specifically SMVPs of five reference blocks, as shown in FIG. 6(b), when predictors in the MVP sequence from front to rear (that is, from left to right) successively are an SMVP_{A1}, SMVP_{B1}, SMVP_{B0}, SMVP_{A0}, SMVP_{B2}, and TMVP, positions that may allow insertion in the second half of the MVP sequence are a position 4, a position 5, and a position 6. The IVMVP (DVP) may be inserted into any position of the position 4, the position 5, and the position 6.

Preferably, when the IVMVP is the MVP, the IVMVP (MVP) is inserted into the forefront of the MVP sequence, that is, in the position 1 of FIG. 6, and a CVL constructed after the IVMVP (MVP) is inserted is shown in FIG. 7(a).

When the IVMVP is the DVP, the IVMVP (DVP) is inserted into the end of the MVP sequence, that is, in the position 6 of FIG. 6, and a CVL constructed after the IVMVP (DVP) is inserted is shown in FIG. 7(b).

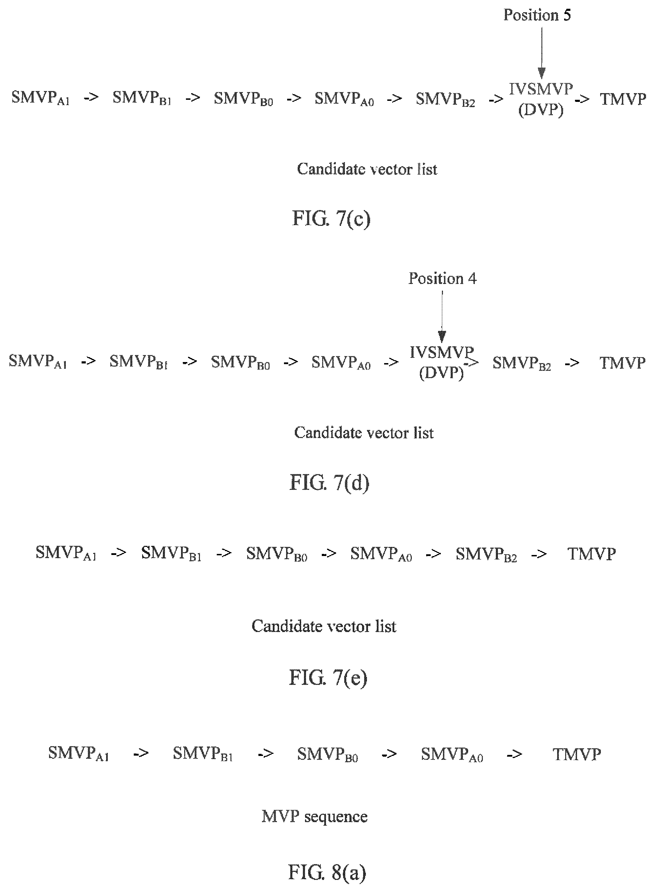

Alternatively, when the IVMVP is the DVP, the IVMVP (DVP) is inserted after the SMVP_{B2} and before the TMVP of the MVP sequence, that is, in the position 5 of FIG. 6, and a CVL constructed after the IVMVP (DVP) is inserted is shown in FIG. 7(c).

Further, alternatively, when the IVMVP is the DVP, the IVMVP (DVP) is inserted after the SMVP_{A0} and before the SMVP_{B2} of the MVP sequence, that is, in the position 4 of FIG 6, and a CVL constructed after the IVMVP (DVP) is inserted is shown in FIG. 7(d).

Optionally, when the IVMVP is the DVP, sorting the IVMVP (DVP) in the MVP sequence may be canceled, that is, the IVMVP (DVP) is not inserted into the MVP sequence, and a CVL with no IVMVP (DVP) inserted is shown in FIG. 7(e).

Using the foregoing implementation manner (2) of step 303 as an example, when the IVMVP is the MVP, a sorting order of the CVL from front to rear successively is an IVMVP (MVP), SMVP_{A1}, SMVP_{B1}, SMVP_{B0}, SMVP_{A0}, SMVP_{B2}, and TMVP, and a constructed CVL is shown in FIG. 7(a).

When the IVMVP is the DVP, a sorting order of the CVL from front to rear successively is the SMVP_{A1}, SMVP_{B1}, SMVP_{B0}, SMVP_{A0}, SMVP_{B2}, TMVP, and IVMVP (DVP), and a constructed CVL is shown in FIG. 7(b).

Alternatively, when the IVMVP is the DVP, a sorting order of the CVL from front to rear successively is the SMVP_{A1}, SMVP_{B1}, SMVP_{B0}, SMVP_{A0}, SMVP_{B2}, IVMVP (DVP), and TMVP, and a constructed CVL is shown in FIG 7(c).

Further, alternatively, when the IVMVP is the DVP, a sorting order of the CVL from front to rear successively is the SMVP_{A1}, SMVP_{B1}, SMVP_{B0}, SMVP_{A0}, IVMVP (DVP), SMVP_{B2}, and TMVP, and a constructed CVL is shown in FIG 7(d).

Optionally, when the IVMVP is the DVP, sorting the IVMVP (DVP) in the MVP sequence may be canceled, that is, the IVMVP (DVP) is not inserted into the MVP sequence, and a CVL with no IVMVP (DVP) inserted is shown in FIG. 7(e).

Further, when the IVMVP is determined, no matter whether the IVMVP is an MVP or a DVP, predictors of the IVMVP, SMVP_{A1}, SMVP_{B1}, SMVP_{B0}, SMVP_{A0}, SMVP_{B2}, and TMVP are acquired separately. The seven vector predictors are sorted according to a descending order of the predictors, with a greater predictor sorted prior to a smaller predictor, thereby constructing the CVL.

It should be noted that, a one-way prediction technology is used in all the foregoing descriptions as the frame prediction technology for description, that is, one IVMVP is acquired from the base view, but in an actual application, a two-way prediction technology may also be used as the frame prediction technology to construct the CVL for the current block, and when the two-way prediction technology is used, two IVMVPs are acquired from the base view. Optionally, when the two-way prediction technology is used, a CVL constructing implementation manner is specifically as follows:

Two IVMVPs are acquired according to step 301. Whether each of the two IVMVPs is the MVP or the DVP is separately determined according to step 302. There are three cases for a result of the determining: a, Both the two IVMVPs are MVPs. b. Both the two IVMVPs are DVPs. c. One IVMVP is the MVP, and the other IVMVP is the DVP.
a. When both the two IVMVPs are MVPs, the two IVMVPs (MVPs) are sorted in a same position according to the sorting manner shown in FIG. 6 or FIG 7, that is, the two IVMVPs (MVPs) are bound as one IVMVP and are sorted in a front position in the MVP list.
b. When both the two IVMVPs are DVPs, the two IVMVPs (DVPs) are sorted in a same position according to the sorting manner shown in FIG. 6 or FIG. 7, that is, the two IVMVPs (DVPs) are bound as one IVMVP and are sorted in a rear position in the MVP list.
c. When one IVMVP, is the MVP, and the other IVMVP is the DVP, the two IVMVPs are bounded, according to the sorting manner shown in FIG. 6 or FIG. 7, as one IVMVP and are sorted in a rear position of the MVP list.

In the method for constructing a CVL provided in the embodiment of the present invention, when the CVL is constructed, an IVMVP can be identified, when the IVMVP is an MVP with higher predictive accuracy, the IVMVP is sorted in the forefront of a MVP sequence, and when the IVMVP is a DVP with lower predictive accuracy, the IVMVP is sorted at the end of the MVP sequence (or a second half of the MVP sequence), and therefore, in a coding process, a vector predictor with higher predictive accuracy may be selected as a vector predictor of a current block, thereby improving coding compression performance.

It should be noted that, in the foregoing embodiment, that all the five SMVPs are involved in the CVL constructing process is used as an example for description, but in an actual application, not more than five SMVPs of the five acquired SMVPs need to be selected and sorted in the CVL according to a related standard. In the embodiment of the present invention, an MVP list, in a form like the SWP_{A1}, SMVP_{B1}, SMVP_{B0}, SMVP_{A0}, SMVP_{B2}, and TMVP, is only used as an example for description, which is not intended to limit the number or sorting order of SMVPs that are added to the MVP list.

The foregoing descriptions are general descriptions of the embodiments of the present invention, and the following provides two specific application scenarios with reference to different inter-frame modes.

### Scenario 1: Merge Mode or Skip Mode

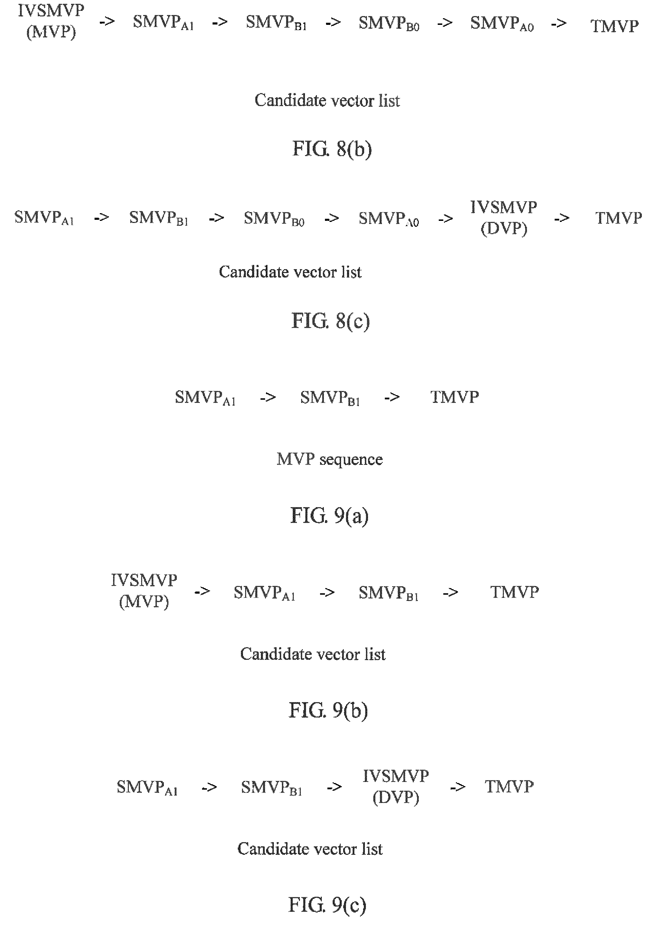

In the MERGE Mode or the Skip Mode, four SMVPs need to be selected from the five acquired SMVPs and inserted into the CVL together with the acquired IVMVP and TMVP. Using that the SMVP_{A1}, SMVP_{B1}, SMVP_{B0}, and SMVP_{A0} are selected as an example, an MVP sequence after the sorting is shown in FIG. 8(a); when the acquired IVMVP is an IVMVP (MVP), the IVMVP (MVP) is sorted in the forefront of the MVP sequence, and a CVL constructed thereby is shown in FIG. 8(b); and when the acquired IVMVP is an IVMVP (DVP), the IVMVP (DVP) is sorted after the SMVP_{A0} and before the TMVP in the MVP sequence, and a CVL constructed thereby is shown in FIG. 8(c).

### Scenario 2: Advanced motion vector mode (Advanced Motion Vector Mode, AMVP Mode for short)

In the AMVP Mode, one SMVP needs to be selected from the acquired SMVP_{A0} and SMVP_{A1}, one SMVP needs to be selected from the acquired SMVP_{B0}, SMVP_{B1}, and SMVP_{B2}, and the two SMVPs are added to the CVL together with the acquired IVMVP and TMVP. Using that the SMVP_{A1} and SMVP_{B1} are selected as an example, an MVP sequence after the sorting is shown in FIG. 9(a); when the acquired IVMVP is an IVMVP (MVP), the IVMVP (MVP) is sorted in the forefront of the MVP sequence, and a CVL constructed thereby is shown in FIG. 9(b); and when the acquired IVMVP is an IVMVP (DVP), the IVMVP (DVP) is sorted after the SMVP_{B1} and before the TMVP in the MVP sequence, and a CVL constructed thereby is shown in FIG 9(c).

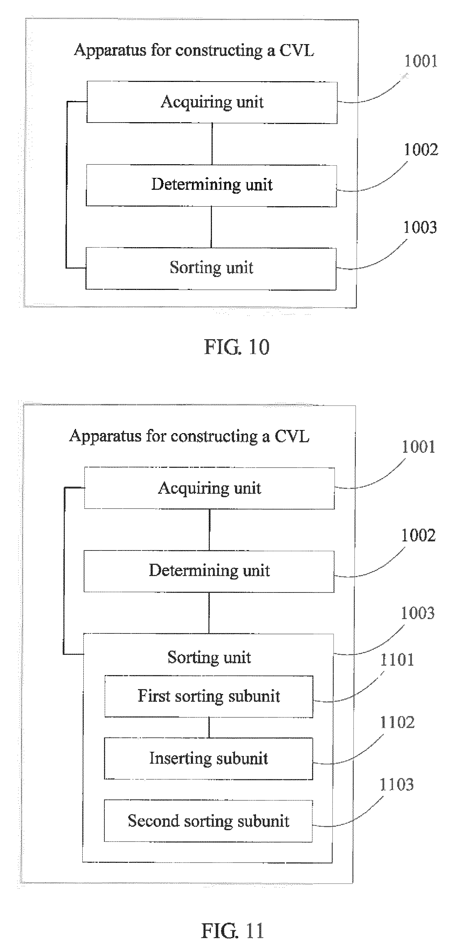

Further, an embodiment of the present invention further provides an apparatus for constructing a CVL, where the apparatus is configured to implement the foregoing method embodiments. As shown in FIG. 10, the apparatus includes: an acquiring unit 1001, a determining unit 1002, and a sorting unit 1003.

The acquiring unit 1001 is configured to acquire an IVMVP of a current block and an MVP of the current block, where the MVP includes a TMVP and an SMVP.

The determining unit 1002 is configured to determine whether the IVMVP acquired by the acquiring unit 1001 is the MVP or a DVP.

The sorting unit 1003 is configured to sort, according to a result of the determining of the determining unit 1002, the IVMVP, the TMVP, and the SMVP that are acquired by the acquiring unit 1001, so as to construct a CVL.

Further, as shown in FIG. 11, the sorting unit 1003 specifically includes:
a first sorting subunit 1101, configured to sort, according to a first preset rule, the TMVP and the SMVP that are acquired by the acquiring unit 1001, so as to acquire a quasi MVP sequence; and
an inserting subunit 1102, configured to insert, according to the result of the determining of the determining unit 1002, the IVMVP that is acquired by the acquiring unit 1001 into the quasi MVP sequence that is sorted by the first sorting subunit 1101, so as to construct the CVL; or
a second sorting subunit 1103, configured to sort, according to the result of the determining of the determining unit 1002 and a second preset rule, the IVMVP, the TMVP, and the SMVP that are acquired by the acquiring unit 1001, so as to construct the CVL.

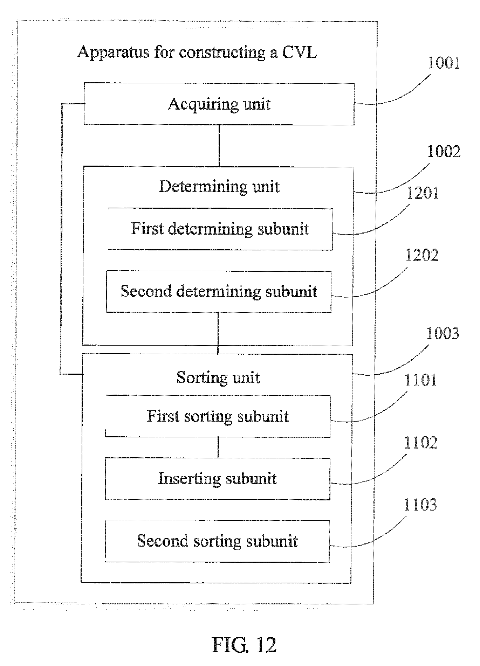

Further, as shown in FIG 12, the sorting unit 1002 specifically includes:
a first determining subunit 1201, configured to determine whether a current frame in which the current block is located and a reference frame directed to by an index value of the IVMVP acquired by the acquiring unit 1001 belong to a same video sequence, where when a result of the determining is that the current frame in which the current block is located and the reference frame directed to by the index value of the IVMVP acquired by the acquiring unit 1001 belong to the same video sequence, the IVMVP is the MVP, and when the result of the determining is that the current frame in which the current block is located and the reference frame directed to by the index value of the IVMVP acquired by the acquiring unit 1001 do not belong to the same video sequence, the IVMVP is the DVP; or
a second determining subunit 1202, configured to determine whether a picture order count POC of a current frame in which the current block is located equals a POC of a reference frame directed to by an index value of the IVMVP acquired by the acquiring unit 1001, where when a result of the determining is that the POC of the current frame in which the current block is located does not equal the POC of the reference frame directed to by the index value of the IVMVP acquired by the acquiring unit 1001, the IVMVP is the MVP, and when the result of the determining is that the POC of the current frame in which the current block is located equals the POC of the reference frame directed to by the index value of the IVMVP acquired by the acquiring unit 1001, the IVMVP is the DVP.

Further, when the acquiring unit 1001 acquires two IVMVPs, the determining unit 1002 is specifically configured to:
determine whether each IVMVP is the MVP or the DVP;
determine that the two IVMVPs are one DVP when at least one of the two IVMVPs is a DVP; and
determine that the two IVMVPs are one MVP when the two IVMVPs are both MVPs.

Further, the sorting unit 1003 is specifically configured to:
when the determining unit 1002 determines that the IVMVP is the MVP, determine that a position of the MVP is prior to a position, when the determining unit determines that the IVMVP is the DVP, of the DVP.

Further, the sorting unit 1003 is specifically configured to:
when the determining unit 1002 determines that the IVMVP is the MVP, determine that any position in a first half of the CVL is the position of the MVP; and
when the determining unit 1002 determines that the IVMVP is the DVP, determine that any position in a second half of the CVL is a position of the DVP.

Further, when the determining unit 1002 determines that the IVMVP is the MVP, a sorting order of the CVL, sorted by the sorting unit 1003, from front to rear successively is the IVMVP, the SMVP, and the TMVP.

Further, when the determining unit 1002 determines that the IVMVP is the DVP:
a sorting order of the CVL, sorted by the sorting unit 1003, from front to rear successively is the SMVP, the TMVP, and the IVMVP; or
a sorting order of the CVL, sorted by the sorting unit 1003, from front to rear successively is the SMVP, the IVMVP, and the TMVP.

Further, the sorting unit 1003 is specifically configured to: determine that a position between any two adjacent SMVPs is a position of the IVMVP when the number of SMVPs acquired by the acquiring unit 1001 is greater than 1.

Further, the sorting unit 1003 is specifically configured to:
when the determining unit 1002 determines that the IVMVP is the DVP, cancel sorting the IVMVP into the CVL.

According to the apparatus for constructing a CVL provided in the embodiment of the present invention, before the CVL is constructed, an IVMVP can be identified to determine whether the IVMVP is an MVP or a DVP, and when the CVL is constructed, if the IVMVP is an MVP with higher predictive accuracy, the IVMVP is sorted in a front position in the CVL, and if the IVMVP is a DVP with lower predictive accuracy, the IVMVP is sorted in a rear position in the CVL, and therefore, in a follow-up coding process, a vector predictor with higher predictive accuracy is selected as a vector predictor of a current block, thereby improving coding compression performance.

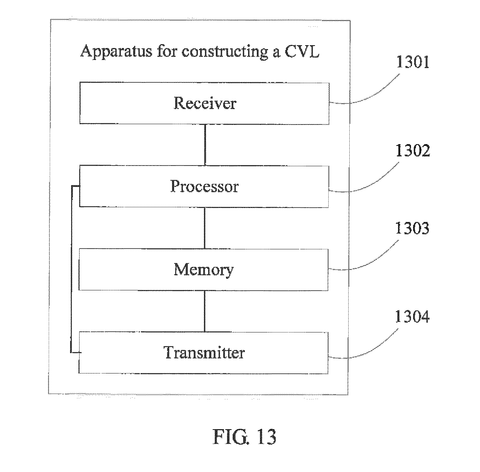

Further, an embodiment of the present invention further provides an apparatus for constructing a CVL, where the apparatus is configured to implement the foregoing embodiments. As shown in FIG. 13, the apparatus includes: an acquiring unit 1301, a processor 1302, a memory 1303, and a transmitter 1304.

The acquiring unit 1301 is configured to acquire an IVMVP of a current block and an MVP of the current block, where the MVP includes a TMVP and an SMVP.

The processor 1302 is configured to determine whether the IVMVP acquired by the acquiring unit 1301 is the MVP or a disparity vector predictor DVP.

The processor 1302 is further configured to sort, according to a result of the determining, the IVMVP, the TMVP, and the SMVP that are acquired by the acquiring unit, so as to construct a CVL.

The transmitter 1304 is configured to transmit the CVL constructed by the processor 1302 to a coding compressor.

Further, the processor 1302 is configured to sort, according to a first preset rule, the TMVP and the SMVP that are acquired by the acquiring unit, so as to acquire a quasi MVP sequence.

The memory 1303 is configured to store the quasi MVP sequence acquired by the processor 1302.

The acquired quasi MVP sequence is used to insert, according to the result of the determining, the IVMVP acquired by the acquiring unit 1301 to the quasi MVP sequence stored by the memory 1303, so as to construct the CVL.

Further, the processor 1302 is further configured to sort, according to the result of the determining and a second preset rule, the IVMVP, the TMVP, and the SMVP that are acquired by the acquiring unit 1301, so as to construct the CVL.

Further, the processor 1302 is configured to determine whether a current frame in which the current block is located and a reference frame directed to by an index value of the IVMVP acquired by the acquiring unit 1301 belong to a same video sequence, where when a result of the determining is that the current frame in which the current block is located and the reference frame directed to by the index value of the IVMVP acquired by the acquiring unit 1301 belong to the same video sequence, the IVMVP is the MVP, and when the result of the determining is that the current frame in which the current block is located and the reference frame directed to by the index value of the IVMVP acquired by the acquiring unit 1301 do not belong to the same video sequence, the IVMVP is the DVP; or
determine whether a picture order count POC of a current frame in which the current block is located equals a POC of a reference frame directed to by an index value of the IVMVP acquired by the acquiring unit 1301, where when a result of the determining is that the POC of the current frame in which the current block is located does not equal the POC of the reference frame directed to by the index value of the IVMVP acquired by the acquiring unit 1301, the IVMVP is the MVP, and when the result of the determining is that the POC of the current frame in which the current block is located equals the POC of the reference frame directed to by the index value of the IVMVP acquired by the acquiring unit 1301, the IVMVP is the DVP.

Further, the processor 1302 is further specifically configured to:
determine whether each IVMVP is the MVP or the DVP separately;
determine that the two IVMVPs are one DVP when at least one of the two IVMVPs is a DVP; and
determine that the two IVMVPs are one MVP when the two IVMVPs are both MVPs.

Further, the processor 1302 is further specifically configured to:
when it is determined that the IVMVP is the MVP, determine that a position of the MVP is prior to a position, when it is determined that the IVMVP is a DVP, of the DVP.

Further, the processor 1302 is further specifically configured to:
when it is determined that the IVMVP is the MVP, determine that any position in a first half of the CVL is the position of the MVP; and
when it is determined that the IVMVP is the DVP, determine that any position in a second half of the CVL is the position of the DVP.

Further, the processor 1302 is further specifically configured to:
when it is determined that the IVMVP is the MVP, sort the CVL from front to rear successively in a sorting order of the IVMVP, the SMVP, and the TMVP; and
when the IVMVP is the DVP:
   sort the CVL from front to rear successively in a sorting order of the SMVP, the IVMVP, and the TMVP; or
   sort the CVL from front to rear successively in a sorting order of the SMVP, the IVMVP, and the TMVP.

Further, the processor 1302 is specifically configured to:
determine that a position between any two adjacent SMVPs is the position of the IVMVP when the number of SMVPs acquired by the acquiring unit 1301 is greater than 1.

Further, the processor 1302 is further specifically configured to:
when the IVMVP is the DVP, cancel sorting the IVMVP into the CVL.

According to the apparatus for constructing a CVL provided in the embodiment of the present invention, before the CVL is constructed, an IVMVP can be identified to determine whether the IVMVP is an MVP or a DVP, and when the CVL is constructed, if the IVMVP is an MVP with higher predictive accuracy, the IVMVP is sorted in a front position in the CVL, and if the IVMVP is a DVP with lower predictive accuracy, the IVMVP is sorted in a rear position in the CVL, and therefore, in a follow-up coding process, a vector predictor with higher predictive accuracy is selected as a vector predictor of a current block, thereby improving coding compression performance.

It may be clearly understood by a person skilled in the art that, for the purpose of convenient and brief description, division of the foregoing function modules is taken as an example for illustration. In actual application, the foregoing functions can be allocated to different modules and implemented according to a requirement, that is, an inner structure of an apparatus is divided into different function modules to implement all or some of the functions described above. For a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the module or unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or some of the technical solutions may be implemented in the form of a software product. The software product is stored in a storage medium and includes several instructions for instructing a computer device (which may be a personal computer, a server, or a network device) or a processor (processor) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A method for constructing a candidate vector list, wherein the method is applied in multi-view coding and decoding, and the method comprises:
acquiring an inter-view motion vector predictor, IVMVP, of a current block and a motion vector predictor, MVP, of the current block, wherein the MVP comprises a temporal motion vector predictor, TMVP, and a spatial motion vector predictor, SMVP;
determining whether the IVMVP is the MVP or a disparity vector predictor, DVP; and
sorting the IVMVP, the TMVP, and the SMVP according to a result of the determining, so as to construct the candidate vector list, CVL.

2. The method according to claim 1, wherein the sorting the IVMVP, the TMVP, and the SMVP according to a result of the determining, so as to construct the candidate vector list, CVL, specifically comprises:
sorting the TMVP and the SMVP according to a first preset rule, so as to acquire a quasi MVP sequence; and
inserting the IVMVP into the quasi MVP sequence according to the result of the determining, so as to construct the CVL.

3. The method according to claim 1, wherein the sorting the IVMVP, the TMVP, and the SMVP according to a result of the determining, so as to construct the candidate vector list, CVL, specifically comprises:
sorting the IVMVP, the TMVP, and the SMVP according to the result of the determining and a second preset rule, so as to construct the CVL.

4. The method according to claim 2 or 3, wherein the determining whether the IVMVP is the MVP or a disparity vector predictor, DVP, specifically comprises:
determining whether a current frame in which the current block is located and a reference frame directed to by an index value of the IVMVP belong to a same video sequence, wherein when a result of the determining is that the current frame in which the current block is located and the reference frame directed to by the index value of the IVMVP belong to the same video sequence, the IVMVP is the MVP, and when the result of the determining is that the current frame in which the current block is located and the reference frame directed to by the index value of the IVMVP do not belong to the same video sequence, the IVMVP is the DVP; or
determining whether a picture order count, POC, of a current frame in which the current block is located equals a POC of a reference frame directed to by an index value of the IVMVP, wherein when a result of the determining is that the POC of the current frame in which the current block is located does not equal the POC of the reference frame directed to by the index value of the IVMVP, the IVMVP is the MVP, and when the result of the determining is that the POC of the current frame in which the current block is located equals the POC of the reference frame directed to by the index value of the IVMVP, the IVMVP is the DVP.

5. The method according to claim 4, wherein when two IVMVPs are acquired, the determining whether the IVMVP is an MVP or a disparity vector predictor, DVP, specifically comprises:
determining whether each IVMVP is the MVP or the DVP separately;
determining that the two IVMVPs are one DVP when at least one of the two IVMVPs is the DVP; and
determining that the two IVMVPs are one MVP when the two IVMVPs are both MVPs.

6. The method according to claim 5, wherein the sorting the IVMVP, the TMVP, and the SMVP according to a result of the determining, so as to construct the candidate vector list, CVL, specifically comprises:
when the IVMVP is the MVP, determining that a position of the MVP is prior to a position, when the IVMVP is the DVP, of the DVP.

7. The method according to claim 6, wherein the determining that a position of the MVP is prior to a position, when the IVMVP is the DVP, of the DVP specifically comprises:
when the IVMVP is the MVP, determining that any position in a first half of the CVL is the position of the MVP; and
when the IVMVP is the DVP, determining that any position in a second half of the CVL is the position of the DVP.

8. The method according to claim 7, wherein the, when the IVMVP is the MVP, determining that any position in a first half of the CVL is the position of the MVP specifically comprises:
determining that a sorting order of the CVL from front to rear successively is the IVMVP, the SMVP, and the TMVP.

9. The method according to claim 7, wherein the, when the IVMVP is the DVP, determining that any position in a second half of the CVL is the position of the DVP specifically comprises:
determining that a sorting order of the CVL from front to rear successively is the SMVP, the TMVP, and the IVMVP; or
that a sorting order of the CVL from front to rear successively is the SMVP, the IVMVP and the TMVP.

10. The method according to claim 7, wherein when the number of SMVPs is greater than 1, the, when the IVMVP is the DVP, determining that any position in a second half of the CVL is the position of the DVP specifically comprises:
determining that a position between any two adjacent SMVPs is a position of the IVMVP.

11. The method according to claim 7, wherein the method further comprises:
when the IVMVP is the DVP, canceling sorting the IVMVP into the CVL.

12. An apparatus for constructing a candidate vector list, wherein the apparatus is applied in multi-view coding and decoding, and the apparatus comprises:
an acquiring unit, configured to acquire an inter-view motion vector predictor, IVMVP, of a current block and a motion vector predictor, MVP, of the current block, wherein the MVP comprises a temporal motion vector predictor, TMVP, and a spatial motion vector predictor, SMVP;
a determining unit, configured to determine whether the IVMVP is the MVP or a disparity vector predictor, DVP; and
a sorting unit, configured to sort the IVMVP, the TMVP, and the SMVP according to a result of the determining, so as to construct the candidate vector list, CVL.

13. The apparatus according to claim 12, wherein the sorting unit specifically comprises:
a first sorting subunit, configured to sort, according to a first preset rule, the TMVP and the SMVP that are acquired by the acquiring unit, so as to acquire a quasi MVP sequence; and
an inserting subunit, configured to insert, according to a result of the determining of the determining unit, the IVMVP that is acquired by the acquiring unit into the quasi MVP sequence that is sorted by the first sorting subunit, so as to construct the CVL.

14. The apparatus according to claim 12, wherein the sorting unit further specifically comprises:
a second sorting subunit, configured to sort, according to a result of the determining of the determining unit and a second preset rule, the IVMVP, the TMVP, and the SMVP that are acquired by the acquiring unit, so as to construct the CVL.

15. The apparatus according to claim 13 or 14, wherein the determining unit specifically comprises:
a first determining subunit, configured to determine whether a current frame in which the current block is located and a reference frame directed to by an index value of the IVMVP acquired by the acquiring unit belong to a same video sequence, wherein when a result of the determining is that the current frame in which the current block is located and the reference frame directed to by the index value of the IVMVP acquired by the acquiring unit belong to the same video sequence, the IVMVP is the MVP, and when the result of the determining is that the current frame in which the current block is located and the reference frame directed to by the index value of the IVMVP acquired by the acquiring unit do not belong to the same video sequence, the IVMVP is the DVP; or
a second determining subunit, configured to determine whether a picture order count, POC, of a current frame in which the current block is located equals a POC of a reference frame directed to by an index value of the IVMVP acquired by the acquiring unit, wherein when a result of the determining is that the POC of the current frame in which the current block is located does not equal the POC of the reference frame directed to by the index value of the IVMVP acquired by the acquiring unit, the IVMVP is the MVP, and when the result of the determining is that the POC of the current frame in which the current block is located equals the POC of the reference frame directed to by the index value of the IVMVP acquired by the acquiring unit, the IVMVP is the DVP.

16. The apparatus according to claim 15, wherein when two IVMVPs are acquired, the determining unit is further specifically configured to:
determine whether each IVMVP is the MVP or the DVP separately;
determine that the two IVMVPs are one DVP when at least one of the two IVMVPs is the DVP; and
determine that the two IVMVPs are one MVP when the two IVMVPs are both MVPs.

17. The apparatus according to claim 16, wherein the sorting unit is specifically configured to:
when the determining unit determines that the IVMVP is the MVP, determine that a position of the MVP is prior to a position, when the determining unit determines that the IVMVP is the DVP, of the DVP.

18. The apparatus according to claim 17, wherein the sorting unit is specifically configured to:
when the determining unit determines that the IVMVP is the MVP, determine that any position in a first half of the CVL is the position of the MVP; and
when the determining unit determines that the IVMVP is the DVP, determine that any position in a second half of the CVL is the position of the DVP.

19. The apparatus according to claim 18, wherein when the determining unit determines that the IVMVP is an MVP, a sorting order of the CVL, sorted by the sorting unit, from front to rear successively is the IVMVP, the SMVP, and the TMVP.

20. The apparatus according to claim 18, wherein when the determining unit determines that the IVMVP is a DVP:
a sorting order of the CVL, sorted by the sorting unit, from front to rear successively is the SMVP, the TMVP, and the IVMVP; or
a sorting order of the CVL, sorted by the sorting unit, from front to rear successively is the SMVP, the IVMVP, and the TMVP.

21. The apparatus according to claim 18, wherein the sorting unit is specifically configured to: when the number of SMVPs is greater than 1, determine that a position between any two adjacent SMVPs is a position of the IVMVP.

22. The apparatus according to claim 18, wherein the sorting unit is specifically configured to:
when the determining unit determines that the IVMVP is the DVP, cancel sorting the IVMVP into the CVL.
